# EUROPEAN PATENT SPECIFICATION

(11) **EP 2 708 130 B1**
(45) Date of publication and mention of the grant of the patent: **09.09.2015**
(21) Application number: 13184723.8
(22) Date of filing: 17.09.2013
(51) Int. Cl.: A21C 3/02, A21C 3/04

(54) **Apparatus for extruding dough**
Vorrichtung zum Extrudieren von Teig
Appareil d'extrusion de pâte

(30) Priority: 17.09.2012 IT VR20120188
(43) Date of publication of application: 19.03.2014
(73) Proprietor: RONDO SCHIO S.R.L., 36015 SCHIO (VI) (IT)
(72) Inventor: Scalzeri, Andrea, 36010 Roana, Fraz. Camporovere VI (IT)
(74) Representative: Modiano, Micaela Nadia

(56) References cited:
- DE-B- 1 247 232
- GB-A- 1 209 362
- GB-A- 1 538 675
- US-A- 3 917 856

## Description

The present invention relates to an apparatus for extruding dough such as bread dough, leavened dough, dough for pizzas, croissants and the like, flaky pastries such as biscuit pastry, flaky-pastry biscuits and the like, dough not intended for baking, such as lasagna dough, ravioli, with and without eggs.

Dough extruders constituted by a hopper with a plurality of pairs of extraction rollers arranged below it, followed by a train of laminating rollers, are known and widely used.

In many cases, the laminating rollers, in forming the continuous sheet of dough, compress and stress the pasty mass until they damage its fibers.

An apparatus for extruding dough is known from Italian patent IT 1264933 by the same Applicant which is constituted by a supporting frame that has a supporting side for a feeding hopper into which a mass of dough to be extruded is placed and, in the following order, from the top downward, a pair of dosage-extractors arranged at the bottom of the hopper in order to extract the dough in a controlled manner from said hopper and, below the pair of dosage-extractors, at least one pair of oppositely rotating calibration or lamination cylinders.

DE 1247232 and GB 1538675 both disclose an apparatus for extruding dough according to the preamble of claim 1.

Although this type of apparatus has considerable advantages, it does not make it possible to adjust practically and effectively the breadth of the compression chamber that is formed by the lateral surfaces of the dosage-extractors and by the pair of calibration cylinders arranged directly below.

The aim of the present invention is to eliminate or at least reduce drastically the drawbacks cited above in known types of apparatuses for extruding dough.

In particular, within this aim, an object of the present invention is to provide an apparatus for extruding dough that can be configured in an optimum manner for the type of dough to be extruded.

Another object of the present invention is to provide an apparatus for extruding dough that avoids the use of flour in the step of creating the ribbon of dough.

Another object of the invention is to devise an apparatus for extruding dough that makes it possible to reduce drastically the lateral tension with respect to the ribbon of dough, so as to ensure better uniformity thereof in output.

This aim, these objects and others that will become more apparent hereinafter are achieved by an apparatus for extruding dough according to what is indicated in appended claim 1.

Further characteristics and advantages of the present invention will become more apparent from the description of some preferred but not exclusive embodiments of an apparatus for extruding dough according to the invention, illustrated by way of non-limiting example in the accompanying drawings, wherein:

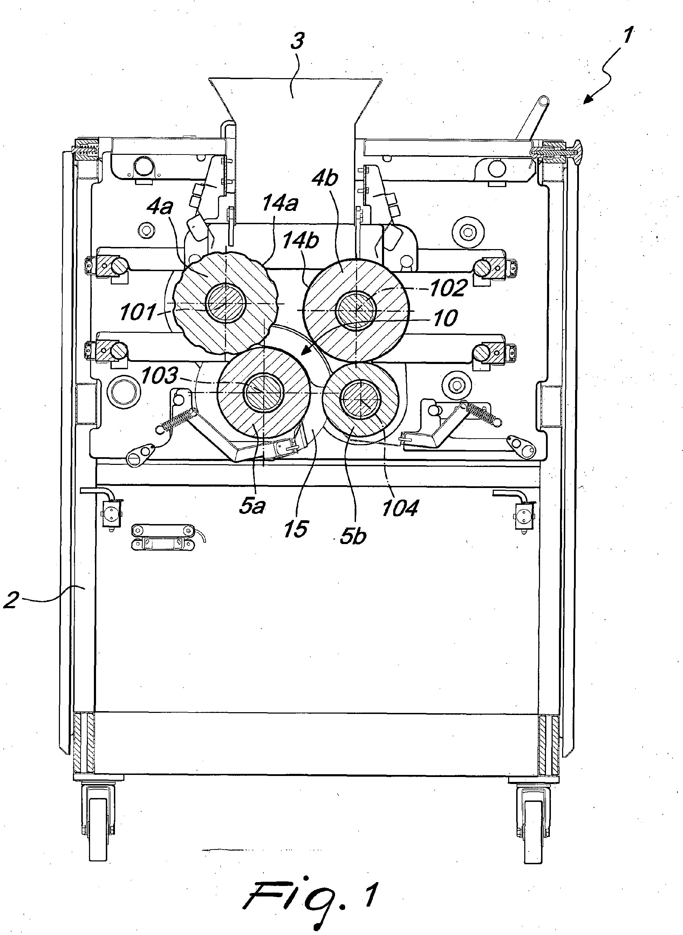

Figure 1 is a sectional lateral elevation view of an apparatus according to the invention;

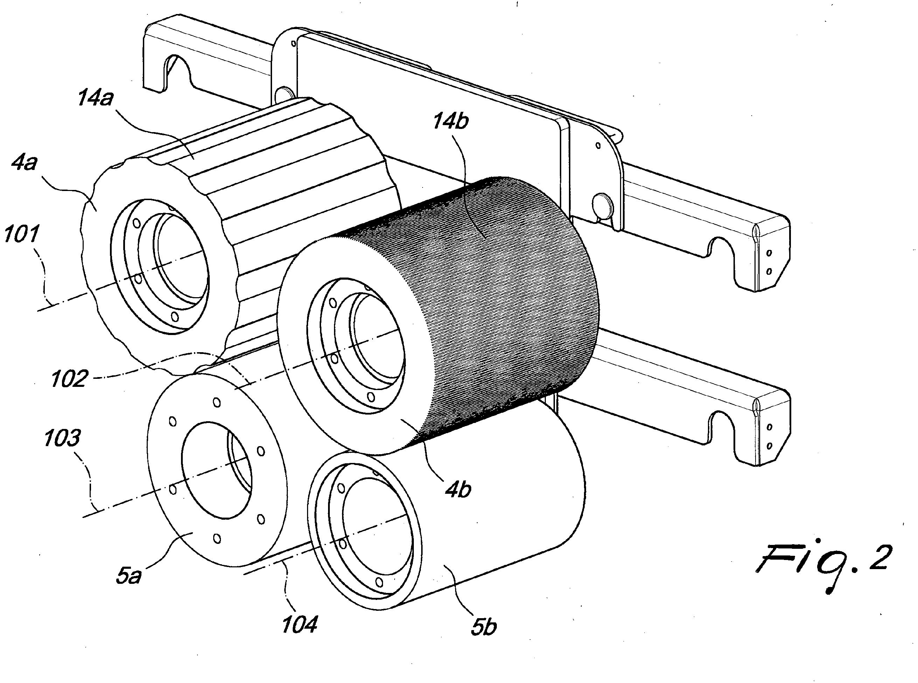

Figure 2 is a perspective view of the pair of extractors and of the pair of calibration cylinders;
Figure 3 is a view, similar to Figure 1, indicating the possibilities of movement of the extractors and of the calibration cylinders.

In the exemplary embodiments that follow, individual characteristics, given in relation to specific examples, may actually be interchanged with other different characteristics that exist in other exemplary embodiments.

With reference to the figures, the present invention relates to an apparatus, generally designated by the reference numeral 1, for extruding dough.

The apparatus comprises a supporting frame 2, a hopper 3 for feeding dough to be extruded, a pair of extractors 4a and 4b, which comprises a first extractor 4a and a second extractor 4b, and is arranged downstream of the feeder hopper 3.

Downstream of the pair of extractors there is at least one pair of calibration cylinders 5a and 5b.

The pair of calibration cylinders 5a and 5b comprises a first calibration cylinder 5a, which is arranged substantially below the first extractor 4a, and a second calibration cylinder 5b, which is arranged substantially below the second extractor 4b.

The pair of extractors 4a and 4b and the pair of calibration cylinders 5a and 5b have respective rotation axes (101, 102, 103, 104) which are substantially mutually parallel.

Conveniently, the calibration cylinder 5a is in a fixed position with respect to the supporting frame 2 and is provided with lateral flanges 15 for following the dough in the compression chamber, designated by the reference numeral 10 in the figures. The lateral flanges 15 further help to guide the dough in output from the compression chamber 10 and also to compact the ribbon of dough in output. Thanks to this operation, the ribbon in output has compacted and constant lateral edges.

According to the present invention, the apparatus 1 comprises first adjustment means 6, which are adapted to adjust the angular position of the rotation axis 101 of the first extractor 4a with respect to the rotation axis 103 of the first calibration cylinder 5a.

As already noted, advantageously the rotation axis 103 of the first calibration cylinder 5a is fixed with respect to the supporting frame 2.

The apparatus 1 is provided with second adjustment means 7 adapted to adjust the angular position of the rotation axis 104 of the second calibration cylinder 5b with respect to the rotation axis 102 of the second extractor 4b.

According to the invention, the apparatus 1 comprises third means 8 for adjusting the distance between the rotation axis 102 of the second extractor 4b and the rotation axis 103 of the first calibration element 5a, allowing consequently an adjustment of the extent of the compression chamber 10.

These third adjustment means 8 are adapted to move the rotation axis 102 of the second extractor 4b along a substantially horizontal direction.

The actuation of the third adjustment means 8 would cause simultaneously a variation of the distance between the axes 102 of the second extractor and 101 of the first extractor.

However, control means are provided which are adapted to compensate this variation for example by means of the action of a servomotor.

The servomotor in fact, as a consequence of the operation on the third adjustment means 8, moves the rotation axis 101 of the first extractor 4a about the rotation axis 103 of the first calibration cylinder 5a, so as to keep fixed the distance between the rotation axes 101 and 102 of the extractors 4a and 4b.

One constructive variation adapted to allow a quick and effective variation of the extent of the compression chamber 10 while keeping unchanged the distance between the rotation axes 101 and 102 of the pair of extractors 4a and 4b provides for the presence of a connecting body 9 between the shanks of the pair of extractors 4a and 4b.

Conveniently, the connecting body 9 also can be provided with a manual or automated movement device that is adapted to make the rotation axis 101 of the first extractor 4a approach, on command, the rotation axis 102 of the second extractor 4b or to remove it from the same.

Conveniently, the pair of extractors 4a, 4b comprises cylindrical elements in which the side wall 14a, 14b is made of plastic material or stainless steel.

Specifically, the side wall 14a, 14b can also be made of an added layer of plastic material.

According to a preferred embodiment, the side wall 14a, 14b of the first and/or second extractors has a surface finish that is comprised in the group that comprises:
- a studded surface;
- a surface with longitudinal grooves;
- a smooth surface;
- a lobate surface;
- a surface having a polygonal transverse cross-section.

The apparatus 1 defines, below the feeding hopper 3, a dough compression chamber 10.

The dough compression chamber 10 is defined in an upper region by the extractors 4a and 4b, in a lower region by the calibration cylinders 5a and 5b, and laterally by the lateral flanges 15 that are integral with the cylinder 5a and by a pair of lateral partitions that extend substantially vertically at the longitudinal ends of the pair of extractors 4a, 4b and of the pair of calibration cylinders 5a, 5b.

According to a preferred embodiment, the lateral partitions are made of microporous steel.

The microporous material is the medium through which a flow of microfiltered pressurized air occurs.

This action generates a sort of air cushion, which does not allow the dough to adhere to the lateral partitions, thus eliminating any friction.

Inside the compression chamber 10 defined by the extractors 4a, 4b and by the calibration cylinders 5a, 5b, the dough is shaped and guided by the mechanical extrusion action of the extractors 4a, 4b and of the calibration cylinders 5a, 5b in motion.

Laterally, at the lateral partitions, friction is substantially eliminated, since the dough glides on the partitions, whereas in output it is subjected to the guiding action of the lateral flanges 15, which rotate synchronously with respect to the first calibration cylinder 5a.

Merely by way of example, the first adjustment means 6 can be constituted by a first linkage for connection between respective shanks of the first extractor 4a and of the first calibration cylinder 5a and means for moving on command, for example a first servomotor, said first connecting linkage about the rotation axis 103 of the first calibration cylinder 5a.

The second adjustment means 7 may be constituted further by a second linkage for connection between respective shanks of the second extractor 4b and of the second calibration cylinder 5 and means for movement on command, constituted for example by a second servomotor, of the second connecting linkage about the rotation axis 102 of the second extractor 4b.

As regards the third adjustment means 8, they can be constituted by slider means, which extend along a substantially horizontal direction and are provided with a base body that is integral with the supporting frame 2 and a movable body that is integral with the rotation axis 102 of the second extractor 4b.

As is known, the supporting frame 2 defines, below the pair or pairs of calibration cylinders 4a, 4b, a belt conveyor, which is designed to pick up and remove the extruded and laminated dough.

The pair of extractors 4a, 4b, as well as the pair of calibration cylinders 5a and 5b, rotate in mutually opposite directions.

The actuation of the extractors 4a, 4b can be independent of the actuation of the calibration cylinders 5a, 5b, in which case their peripheral speed is correlated to the type of dough that is used and to the mutual distance between the rollers.

Operation of the apparatus 1 according to the invention is evident from what has been described above.

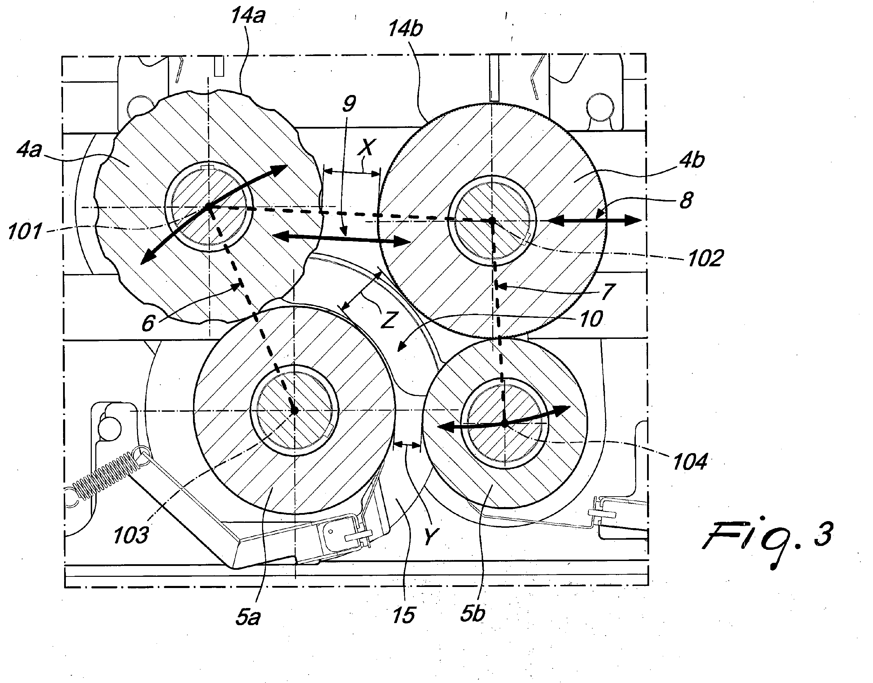

Concerning the possibility of intervening with the configuration of the apparatus 1, the possibility is noted of adjusting in an extremely practical manner:
- the distance between the first extractor 4a and the second extractor 4b (distance designated by X in Figure 3);
- the distance between the first calibration cylinder 4a and the second extractor 4b (distance designated by Z in Figure 3);
- the distance between the first calibration cylinder 5a and the second calibration cylinder 5b (distance designated by Y in Figure 3).

The adjustment of these distances (and accordingly of the extent of the compression chamber 10) is performed automatically by means of electric servomotors.

Thanks to the presence of the first connecting linkage and of the second connecting linkage, the correction of one of the three distances (X, Y and Z) causes automatically the placement of the extractors 4a and 4b and of the calibration cylinders 5a, 5b so as to keep the other two distances unchanged.

This adjustment system makes it possible to find the most suitable position of the extractors 4a and 4b and of the calibration cylinders 5a and 5b in relation to the type of dough in use.

The distances indicated by X and Y are usually defined on the basis of the best possible dough entry (grip capability and emptying of the feeder hopper 3) and of the dough thickness that is needed in output.

The adjustment of the distance Z allows a wide possibility of actions in relation to the type of dough being used: in particular, thanks to this adjustment it becomes possible to vary significantly the extent of the compression chamber 10, thus being able to perform an additional compacting operation on the dough inside the compression chamber 10.

By having a greater possibility of adjustment of the distance Z, it is possible to vary considerably the dimensions, shape and position of the compression chamber 10.

In this manner it is possible to find the ideal adjustment for every type of dough by increasing or decreasing, as needed, the compactness of the dough.

This possibility allows greater uniformity of the dough ribbon in output, with significant benefits on uniformity of weights at the end of the line.

Moreover, the apparatus 1 allows an axial offset of the position of the compression chamber 10 with respect to the axially aligned position.

This ensures better support for soft or very liquid doughs and in any case helps to eliminate tensions inside the dough caused by gravity.

Moreover, the extractors 4a and 4b optionally covered with plastic material may render it unnecessary to use flour during the creation of the ribbon of dough.

This advantage, in addition to the obvious economic savings and the elimination of various problems linked to flour (safety for operator health, reduced need for cleaning, etc.), determines considerable advantages on the uniformity of the ribbon of dough that is created.

Moreover, by operating on the shape of the surface of the rollers (smooth, studded or with particular grooves), one provides, in addition to the advantages described above, further possibilities of varying the grip on the dough, with consequent benefits determined by higher possible pressures on the compression chamber 10 and consequent effects such as the compactness and porosity of said dough.

The provision of the lateral partitions by using microporous material, finally, makes it possible to reduce drastically the lateral tensions with respect to the ribbon of dough and ensures better uniformity thereof in output.

The resulting benefits leads to more constant weights at the end of the line.

All the characteristics of the invention indicated above as advantageous, convenient or the like may also be omitted or be replaced with equivalents.

The invention thus conceived is susceptible of numerous modifications and variations, all of which are within the scope of the appended claims.

In practice it has been found that in all its embodiments, the invention has achieved the intended aim and objects. In practice, the materials used, as well as the dimensions, may be any according to the requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for extruding dough, comprising a supporting frame (2), a hopper (3) for feeding dough to be extruded, a pair of extractors (4a, 4b), which comprises a first extractor (4a) and a second extractor (4b) and is arranged downstream of said feeding hopper (3), at least one pair of calibration cylinders (5a, 5b) arranged downstream of said pair of extractors (4a, 4b), said pair of calibration cylinders (5a, 5b) comprising a first calibration cylinder (5a) arranged substantially below said first extractor (4a) and a second calibration cylinder (5b) arranged substantially below said second extractor (4b), said pair of extractors (4a, 4b) and said pair of calibration cylinders (5a, 5b) having respective rotation axes (101, 102, 103, 104) which are substantially mutually parallel,
**and further comprising** first adjustment means (6) adapted to adjust the angular position of the rotation axis (101) of said first extractor (4a) with respect to the rotation axis (103) of said first calibration cylinder (5a), second adjustment means (7) adapted to adjust the angular position of the rotation axis (104) of said second calibration cylinder (5b) with respect to the rotation axis (102) of said second extractor (4b)
**and** third **adjustment** means (8) for adjusting the distance between the rotation axis (102) of said second extractor (4b) and the rotation axis (103) of said first calibration cylinder (4a), **characterized in that said third adjustment means (8) are adapted to move the rotation axis (102) of said second extractor (4b) along a substantially horizontal direction, said third adjustment means (8) being associated with control means adapted to keep unchanged the distance between the axis (102) of said second extractor and the axis (101) of said first extractor (4a).**

2. The apparatus (1) according to
**claim 1**, **characterized in that** said pair of extractors (4a, 4b) comprises cylindrical elements in which the side wall (14a, 14b) is made of plastic material.

3. The apparatus (1) according to **claim 2**, **characterized in that** said side wall (14a, 14b) has a surface finish comprised in the group that comprises:
- a studded surface;
- a surface with longitudinal grooves;
- a smooth surface;
- a lobate surface;
- a surface having a polygonal transverse cross-section.

4. The apparatus (1) according to one or more of the preceding claims, **characterized in that** it comprises, below said feeding hopper (3), at least one pair of lateral partitions which extend substantially vertically at the longitudinal ends of said pair of extractors (4a, 4b) and of said pair of calibration cylinders (5a, 5b), said lateral partitions being made of microporous steel.

5. The apparatus (1) according to one or more of the preceding claims, **characterized in that** said first adjustment means (**6**) comprise a first linkage for connection between respective shanks of said first extractor (4a) and said first calibration cylinder (5a) and means for moving on command said first connecting linkage about the rotation axis (103) of said first calibration cylinder (5a).

6. The apparatus (1) according to one or more of the preceding claims, **characterized in that** said second adjustment means (7) comprise a second linkage for connection between respective shanks of said second extractor (4b) and said second calibration cylinder (5b) and means for moving on command said second connecting linkage about the rotation axis (102) of said second extractor (4b).

7. The apparatus (1) according to one or more of the preceding claims, **characterized in that** said control means comprise a servomotor adapted to move the rotation axis (101) of said first extractor (4a) about the rotation axis (103) of said first calibration cylinder (5a) so as to keep fixed the distance between the rotation axes (101, 102) of the pair of extractors (4a, 4b) or a body (9) for connection between said first and second extractors (4a, 4b).

8. The apparatus (1) according to **claim 7**, **characterized in that** said connecting body (9) has a movement device adapted to move the rotation axis (101) of said first extractor (4a) and the rotation axis (102) of said second extractor (4b) mutually closer/apart on command.

## Patentansprüche

1. Vorrichtung (1) zur Extrusion von Teig, umfassend einen Tragrahmen (2), einen Trichter (3) zum Zuführen von zu extrudierendem Teig, ein Paar von Extraktoren (4a, 4b), welches einen ersten Extraktor (4a) und einen zweiten Extraktor (4b) umfasst und dem Zuführtrichter (3) nachgeschaltet angeordnet ist, zumindest ein Paar von Kalibrierzylindern (5a, 5b), welches dem Paar von Extraktoren (4a, 4b) nachgeschaltet angeordnet ist, wobei das Paar von Kalibrierzylindern (5a, 5b) einen ersten Kalibrierzylinder (5a), welcher im Wesentlichen unterhalb des ersten Extraktors (4a) angeordnet ist, und einen zweiten Kalibrierzylinder (5b), welcher im Wesentlichen unterhalb des zweiten Extraktors (4b) angeordnet ist, umfasst, wobei das Paar von Extraktoren (4a, 4b) und das Paar von Kalibrierzylindern (5a, 5b) jeweils Rotationsachsen (101, 102, 103, 104) aufweisen, welche im Wesentlichen parallel zueinander sind, und weiter umfassend eine erste Einstellvorrichtung (6), die ausgebildet ist, die Winkelposition der Rotationsachse (101) des ersten Extraktors (4a) in Bezug auf die Rotationsachse (103) des ersten Kalibrierzylinders (5a) einzustellen, eine zweite Einstellvorrichtung (7), welche ausgebildet ist, die Winkelposition der Rotationsachse (104) des zweiten Kalibrierzylinders (5b) in Bezug auf die Rotationsachse (102) des zweiten Extraktors (4b) einzustellen und eine dritte Einstellvorrichtung (8) zur Einstellung des Abstands zwischen der Rotationsachse (102) des zweiten Extraktors (4b) und der Rotationsachse (103) des ersten Kalibrierzylinders (4a), **dadurch gekennzeichnet, dass** die dritte Einstellvorrichtung (8) ausgebildet ist, die Rotationsachse (102) des zweiten Extraktors (4b) entlang einer im Wesentlichen horizontalen Richtung zu bewegen, wobei die dritte Einstellvorrichtung (8) mit einer Steuervorrichtung verbunden ist, welche angepasst ist, den Abstand zwischen der Achse (102) des zweiten Extraktors und der Achse (101) des ersten Extraktors (4a) unverändert zu lassen.

2. Vorrichtung (1) nach Anspruch 1, **dadurch gekennzeichnet, dass** das Paar von Extraktoren (4a, 4b) zylindrische Elemente umfasst, bei welchen die Längswand (14a, 14b) aus einem Plastikmaterial besteht.

3. Vorrichtung (1) nach Anspruch 2, **dadurch gekennzeichnet, dass** die Längswand (14a, 14b) ein Oberflächenfinish aufweist, das in einer Gruppe enthalten ist, welche umfasst:
- eine bestückte Oberfläche;
- eine Oberfläche mit länglichen Rillen;
- eine glatte Oberfläche;
- eine gelappte Oberfläche;
- eine Oberfläche mit einem polygonalen Querschnitt.

4. Vorrichtung (1) nach einem oder mehreren der vorhergehenden Ansprüche, **dadurch gekennzeichnet, dass** sie unterhalb des Zuführtrichters (3) zumindest ein Paar von seitlichen Teilen umfasst, welche sich im Wesentlichen vertikal an den longitudinalen Enden des Paars von Extraktoren (4a, 4b) und des Paars von Kalibrierzylindem (5a, 5b) erstreckt, wobei die seitlichen Teile aus mikroporösen Stahl bestehen.

5. Vorrichtung (1) nach einem oder mehreren der vorhergehenden Ansprüche, **dadurch gekennzeichnet, dass** die erste Einstellvorrichtung (6) ein erstes Gestänge für eine Verbindung zwischen entsprechenden Schäften des ersten Extraktors (4a) und des ersten Kalibrierzylinders (5a) und eine Vorrichtung zur gesteuerten Bewegung des ersten Verbindungsgestänges um die Rotationsachse (103) des ersten Kalibrierzylinders (5a) umfasst.

6. Vorrichtung (1) nach einem oder mehreren der vorhergehenden Ansprüche, **dadurch gekennzeichnet, dass** die zweite Einstellvorrichtung (7) ein zweites Gestänge für eine Verbindung zwischen entsprechenden Schäften des zweiten Extraktors (4b) und des zweiten Kalibrierzylinders (5b) und eine Vorrichtung
zur gesteuerten Bewegung des zweiten Verbindungsgestänges um die Rotationsachse (102) des zweiten Extraktors (4b) umfasst.

7. Vorrichtung (1) nach einem oder mehreren der vorhergehenden Ansprüche, **dadurch gekennzeichnet, dass** die Steuervorrichtung einen Servomotor, der ausgebildet ist, die Rotationsachse (101) des ersten Extraktors (4a) um die Rotationsachse (103) des ersten Kalibrierzylinders (5a) derart zu bewegen, dass der Abstand zwischen den Rotationsachsen (101, 102) des Paars von Extraktoren (4a, 4b) fixiert bleibt, oder einen Körper (9) für eine Verbindung zwischen dem ersten und zweiten Extraktor (4a, 4b) umfasst.

8. Vorrichtung (1) nach Anspruch 7, **dadurch gekennzeichnet, dass** der Verbindungskörper (9) eine Antriebsvorrichtung aufweist, die angepasst ist, die Rotationsachse (101) des ersten Extraktors (4a) und die Rotationsachse (102) des zweiten Extraktors (4b) gesteuert näher zueinander/weiter entfernt voneinander zu bewegen.

## Revendications

1. Appareil (1) d'extrusion de pâte, comprenant un bâti de support (2), une trémie (3) pour alimenter la pâte à extruder, une paire d'extracteurs (4a, 4b) qui comprend un premier extracteur (4a) et un second extracteur (4b) et est agencée en aval de ladite trémie d'alimentation (3), au moins une paire de cylindres de calibrage (5a, 5b) agencée en aval de ladite paire d'extracteurs (4a, 4b), ladite paire de cylindres de calibrage (5a, 5b) comprenant un premier cylindre de calibrage (5a) agencé sensiblement au-dessous dudit premier extracteur (4a) et un second cylindre de calibrage (5b) agencé sensiblement au-dessous dudit second extracteur (4b), ladite paire d'extracteurs (4a, 4b) et ladite paire de cylindres de calibrage (5a, 5b) ayant des axes de rotation (101, 102, 103, 104) respectifs qui sont sensiblement mutuellement parallèles, et comprenant en outre des premiers moyens d'ajustement (6) adaptés pour ajuster la position angulaire de l'axe de rotation (101) dudit premier extracteur (4a) par rapport à l'axe de rotation (103) dudit premier cylindrique de calibrage (5a), des deuxièmes moyens d'ajustement (7) adaptés pour ajuster la position angulaire de l'axe de rotation (104) dudit second cylindre de calibrage (5b) par rapport à l'axe de rotation (102) dudit second extracteur (4b), et des troisièmes moyens d'ajustement (8) pour ajuster la distance entre l'axe de rotation (102) dudit second extracteur (4b) et l'axe de rotation (103) dudit premier cylindre de calibrage (4a), **caractérisé en ce que** lesdits troisièmes moyens d'ajustement (8) sont adaptés pour déplacer l'axe de rotation (102) dudit second extracteur (4b) le long d'une direction sensiblement horizontale, lesdits troisièmes moyens d'ajustement (8) étant associés avec des moyens de commande adaptés pour maintenir la distance entre l'axe de rotation (102) dudit second extracteur et l'axe (101) dudit premier extracteur (4a) inchangée.

2. Appareil (1) selon la revendication 1, **caractérisé en ce que** ladite paire d'extracteurs (4a, 4b) comprend des éléments cylindriques dans lesquels la paroi latérale (14a, 14b) est réalisée à partir de matière plastique.

3. Appareil (1) selon la revendication 2, **caractérisé en ce que** ladite paroi latérale (14a, 14b) a une finition de surface comprise dans le groupe comprenant :
une surface clouée ;
une surface avec des rainures longitudinales ;
une surface lisse ;
une surface lobée ;
une surface ayant une section transversale polygonale.

4. Appareil (1) selon une ou plusieurs des revendications précédentes, **caractérisé en ce qu'**il comprend, au-dessous de ladite trémie d'alimentation (3), au moins une paire de séparations latérales qui s'étendent sensiblement verticalement au niveau des extrémités longitudinales de ladite paire d'extracteurs (4a, 4b) et de ladite paire de cylindres de calibrage (5a, 5b), lesdites séparations latérales étant réalisées à partir d'acier microporeux.

5. Appareil (1) selon une ou plusieurs des revendications précédentes, **caractérisé en ce que** lesdits premiers moyens d'ajustement (6) comprennent une première liaison pour le raccordement entre des tiges respectives dudit premier extracteur (4a) et dudit premier cylindre de calibrage (5a) et des moyens pour déplacer, sur commande, ladite première liaison de raccordement autour de l'axe de rotation (103) dudit premier cylindre de calibrage (5a).

6. Appareil (1) selon une ou plusieurs des revendications précédentes, **caractérisé en ce que** lesdits deuxièmes moyens d'ajustement (7) comprennent une seconde liaison pour le raccordement entre des tiges respectives dudit second extracteur (4b) et dudit second cylindre de calibrage (5b) et des moyens pour déplacer, sur commande, ladite seconde liaison de raccordement autour de l'axe de rotation (102) dudit second extracteur (4b).

7. Appareil (1) selon une ou plusieurs des revendications précédentes, **caractérisé en ce que** lesdits moyens de commande comprennent un servomoteur adapté pour déplacer l'axe de rotation (101) dudit premier extracteur (4a) autour de l'axe de rotation (103) dudit premier cylindre de calibrage (5a) afin de maintenir la distance entre les axes de rotation (101, 102) de la paire d'extracteurs (4a, 4b) ou un corps (9) pour le raccordement entre lesdits premier et second extracteurs (4a, 4b), fixe.

8. Appareil (1) selon la revendication 7, **caractérisé en ce que** ledit corps de raccordement (9) a un dispositif de déplacement adapté pour rapprocher / éloigner mutuellement, sur commande, l'axe de rotation (101) dudit premier extracteur (4a) et l'axe de rotation (102) dudit second extracteur (4b).
